# EUROPEAN PATENT APPLICATION

(11) **EP 4 852 172 A1**
(43) Date of publication of application: **09.12.2026**
(21) Application number: 24921446.1
(22) Date of filing: 18.09.2024
(51) Int. Cl.: H01M 50/244

(54) **BATTERY TRAY, BATTERY PACK AND ELECTRIC DEVICE**

(30) Priority: 02.02.2024 CN 202420276942 U
(71) Applicant: BYD Company Limited, Shenzhen, Guangdong 518118 (CN)
(72) Inventor: SHANG, Daoxiang, Shenzhen, Guangdong 518118 (CN); LIU, Taoran, Shenzhen, Guangdong 518118 (CN); YE, Qiwei, Shenzhen, Guangdong 518118 (CN); SONG, Ru, Shenzhen, Guangdong 518118 (CN)
(74) Representative: Schott, Jakob Valentin
(86) International application number: PCT/CN2024/119516
(87) International publication number: WO 2025/161421

(57) **Abstract**

A battery tray (100), a battery pack and an electric device. The battery tray (100) comprises an annular frame (110), a support portion (120) provided at the bottom of the annular frame (110), and a bottom plate (200); a first adhesive tank (121) and a second adhesive tank (122) are formed in the support portion (120); the first adhesive tank (121) is configured to accommodate a first adhesive (300), the second adhesive tank (122) is configured to accommodate a second adhesive (400), and the second adhesive tank (122) is annular and is provided along the contour of the support portion (120); and the bottom plate (200) is connected to the support portion (120) in a sealed manner by means of the first adhesive (300) provided in the first adhesive tank (121) and the second adhesive (400) provided in the second adhesive tank (122). The battery tray (100) can improve the sealing level between the bottom plate (200) and the support portion (120), and meet various working conditions of a battery pack.

## Description

### CROSS-REFERENCE TO RELATED APPLICATIONS

The present disclosure claims priority to Chinese Patent Application No. 202420276942.1, filed with the China National Intellectual Property Administration on February 2, 2024 and entitled "BATTERY TRAY, BATTERY PACK, AND POWER-CONSUMING DEVICE", which is incorporated herein by reference in its entirety.

### TECHNICAL FIELD

The present disclosure relates to the field of battery structure technologies, and in particular, to a battery tray, a battery pack, and a power-consuming device.

### BACKGROUND

In related technologies, a power battery includes a tray and a battery located in the tray. In order to achieve sealing performance of a battery pack, the bottom of the tray usually includes a bottom plate, and the battery is located in battery mounting space enclosed by the tray and the bottom plate. Because the battery pack is required to remain sealed without failure under various operating conditions, a sealing requirement between the bottom plate and the tray is extremely high. Therefore, how to better achieve the sealing between the bottom plate and the tray becomes an urgent technical problem to be resolved.

### SUMMARY

An objective of the present disclosure is to provide a battery tray, a battery pack, and a power-consuming device. The battery tray can improve a sealing level between a bottom plate and a support portion of the tray, to meet various operating conditions of the battery pack.

To achieve the foregoing objectives, a first aspect of the present disclosure provides a battery tray, including:
an annular frame;
a support portion disposed at the bottom of the annular frame, where the support portion is formed with a first adhesive groove and a second adhesive groove, the first adhesive groove is configured to dispose a first adhesive, the second adhesive groove is configured to dispose a second adhesive, and the second adhesive groove is annular and disposed along a contour of the support portion; and
a bottom plate sealingly connected to the support portion through the first adhesive disposed in the first adhesive groove and the second adhesive disposed in the second adhesive groove.

Optionally, the first adhesive groove is located on an inner side of the second adhesive groove.

Optionally, the first adhesive is formulated as a structural adhesive, and the second adhesive is formulated as a sealant.

Optionally, an adhesive overflow port is formed on an inner side of the first adhesive groove.

Optionally, there are a plurality of adhesive overflow ports, and the plurality of adhesive overflow ports are spaced apart in an inner side edge of the first adhesive groove.

Optionally, a width of the first adhesive groove is greater than 24 mm, and a width of the second adhesive groove is greater than 5 mm; and/or
depths of the first adhesive groove and second adhesive groove are greater than or equal to 1 mm.

Optionally, the bottom plate is constructed as a PCM plate.

Optionally, a side wall of the annular frame is formed with or provided with a reinforcing rib structure.

Optionally, the reinforcing rib structure includes a first reinforcing rib disposed on an inner side wall of the annular frame; and/or
the reinforcing rib structure includes a second reinforcing rib disposed on an outer side wall of the annular frame.

Optionally, the first reinforcing rib is constructed as first ribs spaced apart in a length direction of at least one side frame of the annular frame and extending in a depth direction of the annular frame.

The second reinforcing rib is constructed as second ribs extending in the length direction of the at least one side frame of the annular frame and spaced apart in the depth direction of the annular frame.

Optionally, a cross-sectional area of the first rib gradually increases toward the bottom plate.

Optionally, the battery tray further includes a lifting lug disposed on the outer side wall of the annular frame.

Optionally, the lifting lug includes a lifting lug body and a lifting lug reinforcing rib disposed on the lifting lug body.

Optionally, the support portion includes an annular support sub-portion connected to the bottom of the inner side wall of the annular frame, and a first support sub-portion disposed inside the annular support sub-portion and connected to at least two opposite sides of the annular support sub-portion.

The first adhesive groove is provided on the annular support sub-portion and the first support sub-portion.

The second adhesive groove is provided on the annular support sub-portion and spaced apart from the first adhesive groove.

Optionally, the tray is integrally formed by die casting.

A second aspect of the present disclosure provides a battery pack. The battery pack includes the battery tray provided in the first aspect of the present disclosure.

A third aspect of the present disclosure further provides a power-consuming device. The power-consuming device includes the battery pack provided in the second aspect of the present disclosure.

According to the foregoing technical solution, a battery tray of the present disclosure includes an annular frame, a support portion formed with a first adhesive groove and a second adhesive groove, and a bottom plate. The first adhesive groove is configured to dispose a first adhesive, and the second adhesive groove is configured to dispose a second adhesive. The bottom plate may be sealingly connected to the support portion through the first adhesive disposed in the first adhesive groove and the second adhesive disposed in the second adhesive groove. This can improve a sealing level between the bottom plate and the support portion, to meet various operating conditions of a battery pack.

Other features and advantages of the present disclosure will be described in detail in the following specific implementations.

### BRIEF DESCRIPTION OF DRAWINGS

The accompanying drawings are intended to provide a further understanding of the present disclosure, constitute a part of this specification, and together with the following specific implementations, to explain the present disclosure, but do not constitute a limitation on the present disclosure. In the drawings:
FIG. 1 is a diagram of a structure of a battery tray according to some embodiments of the present disclosure;
FIG. 2 is an exploded view of a battery tray according to some embodiments of the present disclosure;
FIG. 3 is a diagram of a structure of an annular frame of a battery tray according to some embodiments of the present disclosure;
FIG. 4 is an enlarged view of portion A in FIG. 3;
FIG. 5 is a diagram of a structure of an annular frame of a battery tray from another perspective according to some embodiments of the present disclosure; and
FIG. 6 is an enlarged view of portion B in FIG. 5.

### DESCRIPTION OF EMBODIMENTS

The following describes specific implementations of the present discloses is detail with reference to the accompanying drawings. It should be understood that the specific implementations described herein are merely used to describe and explain the present discloses, and are not intended to limit the present discloses.

In the present disclosure, unless otherwise stated, orientation terms such as "inner" and "outer" refer to the inside and outside of a contour of a corresponding component, and "far" and "near" refer to a corresponding structure or component being far away from or close to another structure or component. In addition, the terms "first", "second", and the like used in the present disclosure are intended to distinguish one element from another, and do not imply any order or importance. Moreover, in the following descriptions, when reference is made to the accompanying drawings, unless otherwise explained, same reference numerals in different accompanying drawings indicate a same or similar element. The foregoing definitions are merely used to explain and describe the present disclosure, and are not intended to limit the present disclosure.

In related technologies, a power battery usually includes a tray and a battery located in the tray. In order to achieve sealing performance of a battery pack, the bottom of the tray usually includes a bottom plate, and the battery is located in battery mounting space enclosed by the tray and the bottom plate. Because the battery pack is required to meet various operating conditions such as vibration, stone impact, high and low temperatures, and water wading, and to remain sealed without failure under various operating conditions, a sealing requirement between the bottom plate and the tray is extremely high. Therefore, how to better achieve the sealing between the bottom plate and the tray becomes an urgent technical problem to be resolved.

In addition, the battery tray includes an aluminum alloy battery tray. The aluminum alloy battery tray includes a bottom plate and a frame. The frame covers an outer edge of the bottom plate and is welded to the bottom plate. A lower surface of the frame and a lower surface of the bottom plate are located on a same plane. This battery tray has the following problems:
1. the tray is of a tailor-welded structure, resulting in low processing efficiency and high costs;
2. mechanical properties of a welded portion are degraded;
3. the welded portion is prone to air leakage, and a weld scar needs to be sealed with an adhesive;
4. the bottom of the tray is prone to arc strikes; and
5. the structure is not the most lightweight solution.

In view of this, the present disclosure provides a battery tray, a battery pack, and a power-consuming device, to resolve at least some of the foregoing technical problems.

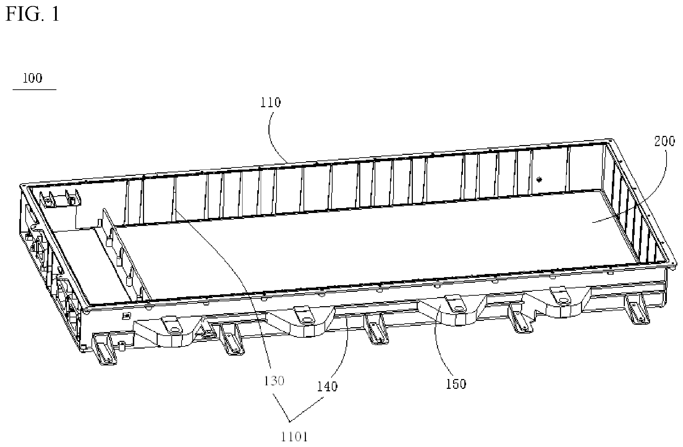

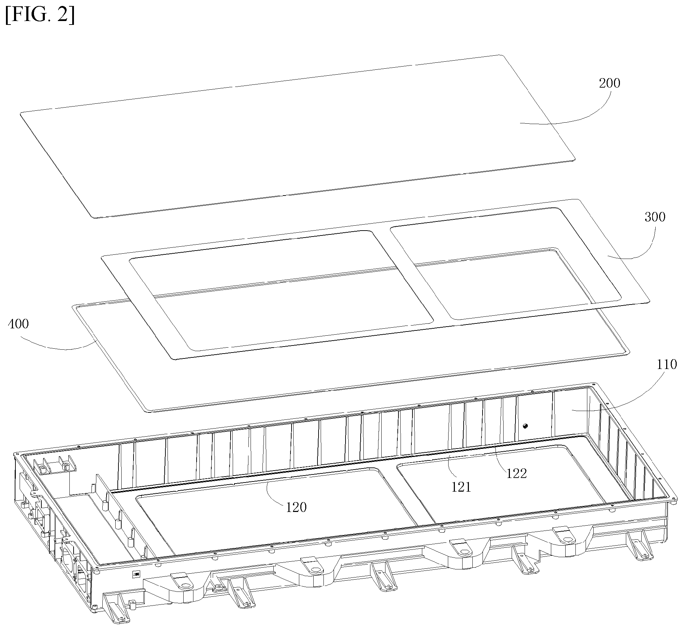

To achieve the foregoing objectives, as shown in FIG. 1 to FIG. 6, an embodiment of the present disclosure provides a battery tray. The battery tray 100 includes an annular frame 110, a support portion 120 disposed at the bottom of the annular frame 110, and a bottom plate 200. The support portion 120 is formed with a first adhesive groove 121 and a second adhesive groove 122. The first adhesive groove 121 is configured to dispose a first adhesive 300, and the second adhesive groove 122 is configured to dispose a second adhesive 400. The second adhesive groove 122 is annular and disposed along a contour of the support portion 120. The bottom plate 200 is sealingly connected to the support portion 120 through the first adhesive 300 and the second adhesive 400.

According to the foregoing technical solution, the battery tray 100 of the present disclosure includes the annular frame 110, the support portion 120 formed with the first adhesive groove 121 and the second adhesive groove 122, and the bottom plate 200. The first adhesive groove 121 is configured to dispose the first adhesive 300, and the second adhesive groove 122 is configured to dispose the second adhesive 400. The second adhesive groove 122 is annular and disposed along the contour of the support portion 120. The bottom plate 200 may be sealingly connected to the support portion 120 through the first adhesive 300 disposed in the first adhesive groove 121 and the second adhesive 400 disposed in the second adhesive groove 122. This can improve a sealing level between the bottom plate 200 and the support portion 120, to meet various operating conditions of a battery pack.

It should be noted that the first adhesive 300 is formulated as a structural adhesive, and the second adhesive 400 is formulated as a sealant. The first adhesive groove 121 is located on an inner side of the second adhesive groove 122. The structural adhesive achieves a high-bond-strength connection between the bottom plate 200 and the support portion 120, and the sealant achieves a sealed connection between the bottom plate 200 and the support portion 120, thereby improving the sealing level between the bottom plate 200 and the support portion 120.

In the battery tray of the present disclosure, the structural adhesive is disposed in the first adhesive groove 121, and the sealant is disposed in the second adhesive groove 122. The bottom plate 200 is sealingly connected to the support portion 120 through the structural adhesive disposed in the first adhesive groove 121 and the sealant disposed in the second adhesive groove 122. The structural adhesive achieves the high-bond-strength connection between the bottom plate 200 and the support portion 120, and the sealant achieves the sealed connection between the bottom plate 200 and the support portion 120, thereby improving the sealing level between the bottom plate 200 and the support portion 120 and meeting the various operating conditions of the battery pack.

The annular frame 110 and the support portion 120 may be constructed using any suitable structure. The support portion 120 may be an annular structure, and a side edge of the support portion 120 is connected to the bottom of an inner side wall of the annular frame 110. The support portion 120 and the annular frame 110 may be connected by welding, or may be integrally formed, including but not limited to being integral die casting. For example, the annular frame 110 and the support portion 120 are integrally formed by high-vacuum high-pressure die casting of high-strength aluminum alloy, without weld joints between the annular frame 110 and the support portion 120, thereby achieving a dense internal structure and high sealing performance.

The bottom plate 200 may be made of any suitable structure or material. For example, the bottom plate 200 is constructed as a PCM plate. The PCM may be made of a mixture of polycarbonate (PC) and polymethyl methacrylate (PMMA). This material has good flexibility and curability, and also can change physical status based on a variation in external temperature. The PCM plate is commonly used to manufacture panels for home appliances such as a refrigerator, a washing machine, and a water heater. The PCM plate combines characteristics of a cold-rolled steel sheet and a galvanized steel sheet, and is treated with a special amino resin and a catalyst, thereby imparting better performance to a product. In addition, the PCM plate also has corrosion resistance and flexibility, meeting a requirement of a highspeed and precision machining device. The PCM has a wide range of applications, and is mainly used in panels and side panels of a refrigerator, a washing machine, and the like.

The battery tray 100 may include the annular frame 110 and the support portion 120 that are integrally formed by thin-walled die casting, and the PCM bottom plate 200. The support portion 120 is connected to the bottom plate 200 through the structural adhesive, and the sealant is applied around an entire circumference to ensure sealing. The structure that bears a load of the battery pack employs a thin-walled annular frame 110 of die-cast aluminum alloy, with an overall thin wall thickness. A reinforcing rib is employed to increase strength of a load-bearing portion. The die-cast aluminum alloy may be a heat-treatment-free aluminum alloy with high strength, high toughness, and high corrosion resistance. The PCM plate is employed for the non-critical load-bearing bottom to reduce weight and to insulate a module from an enclosure. An aluminum alloy material includes the following components: Si: 9.5% to 10.5%; Mg: 0.15% to 0.2%; Mn: 0.5% to 0.7%; Fe: <0.15%; Cu: <0.03%; Zn: <0.04%; Ti: 0.06% to 0.10%; Sr: 0.015% to 0.027%; others: <0.05%; total others: <0.15%; and Al: balance. The material is formed by a high-vacuum die casting process.

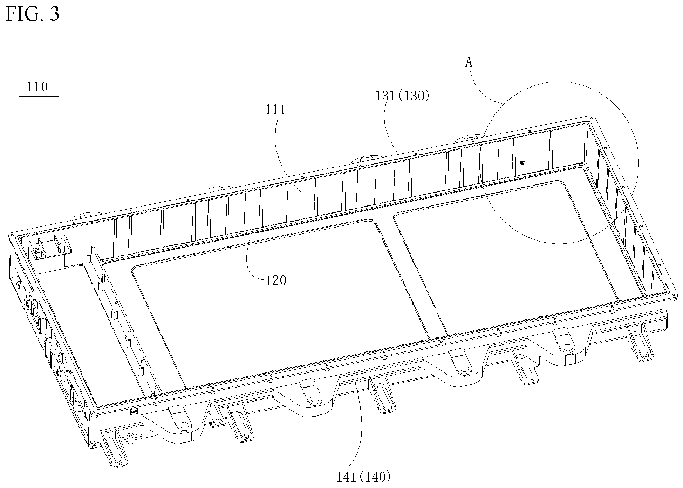

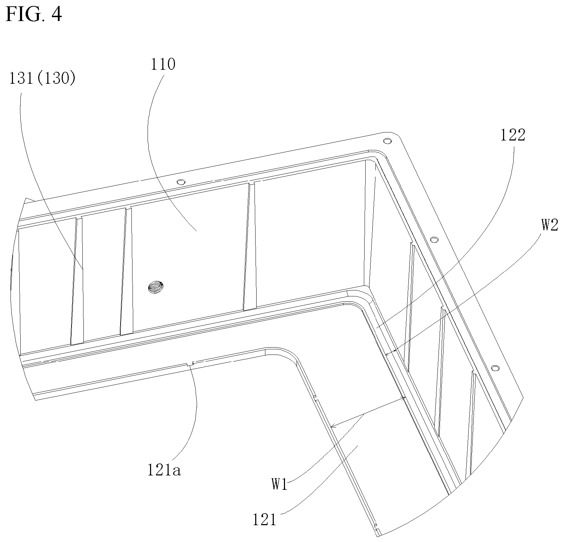

In order to ensure that a bonding surface is free of voids and adhesive discontinuities after an adhesive pressed in the first adhesive groove 121 is cured, as shown in FIG. 3 and FIG. 4, in some embodiments, an adhesive overflow port 121a is formed on an inner side of the first adhesive groove 121.

Two rings of adhesive grooves are disposed on an upper support surface of the support portion 120, including the first adhesive groove 121 and the second adhesive groove 122. The first adhesive groove 121 is used for a high-bond-strength structural adhesive connection between the bottom plate 200 (for example, a high-strength glass-fiber composite bottom plate 200) and the support portion 120. Adhesive overflow ports 121a are evenly provided around the inner side of the first adhesive groove 121 to ensure that the bonding surface is free of voids and adhesive discontinuities after the pressed adhesive is cured, thereby ensuring bonding strength of the bottom plate 200. The second adhesive groove 122 is used for applying a high-performance sealant to ensure sealing between the bottom plate 200 and the support portion 120.

In some other embodiments, there are a plurality of adhesive overflow ports 121a, and the plurality of adhesive overflow ports 121a are spaced apart along an inner side edge of the first adhesive groove 121. In an extension direction of the first adhesive groove 121, a spacing between two adjacent adhesive overflow ports 121a may be the same or different, either of which allows an excess structural adhesive in the first adhesive groove 121 to be discharged through the adhesive overflow port 121a, thereby improving bonding effect between the bottom plate 200 and the support portion 120 at a position of the first adhesive groove 121.

Optionally, a width of the first adhesive groove 121 is greater than 24 mm, and reference may be made to W1 shown in FIG. 4 for the specific width of the first adhesive groove 121; and a width of the second adhesive groove 122 is greater than 5 mm, and reference may be made to W2 shown in FIG. 4 for the specific width of the second adhesive groove 122; and/or, depths of the first adhesive groove 121 and the second adhesive groove 122 are greater than or equal to 1 mm.

The depths of each of the first adhesive groove 121 and the second adhesive groove 122 may be 1 mm. The first adhesive groove 121 is filled with the structural adhesive and has a width greater than 24 mm, to firmly connect the bottom plate 200 (for example, the PCM plate) to the bottom of an enclosure frame. The adhesive overflow ports 121a are evenly provided on the inner side of the first adhesive groove 121, to allow gas within the adhesive groove to be discharged and the excess structural adhesive to overflow the adhesive groove during adhesive pressing, thereby ensuring that the PCM plate is assembled in a required position and an adhesive bonding area is ensured. The second adhesive groove 122 is filled with the sealant and has a width greater than 5 mm, so that a connection boundary between the PCM plate and the support portion 120 is reliably sealed, thereby meeting a sealing requirement under operating conditions such as vibration and ball impact, and ensuring functional safety of a battery system.

In order to achieve lightweighting of the battery tray 100, in some embodiments, a side wall of the annular frame 110 is formed with a reinforcing rib structure 1101. For example, the reinforcing rib structure 1101 may be integrally molded. The annular frame 110 may employ a thin-walled structure to reduce weight of the battery tray 100. In addition, to meet a strength requirement of the annular frame 110, the reinforcing rib structure 1101 may further be disposed on the side wall of the annular frame 110, which may be achieved by welding or other connection methods, to improve strength of the annular frame 110 and meet a use requirement of the battery pack.

The reinforcing rib structure 1101 may be designed in any suitable form, and may be disposed on the inner side wall or an outer side wall of the annular frame 110, or may be simultaneously disposed on both the inner side wall and the outer side wall. In some embodiments, the reinforcing rib structure 1101 includes a first reinforcing rib 130 disposed on the inner side wall of the annular frame 110. The first reinforcing rib 130 may be constructed using any suitable structure, for example, a strip-shaped reinforcing rib, a mesh-shaped reinforcing rib, or a combination structure of both. Through cooperation between the first reinforcing rib 130 and the annular frame 110, strength of the battery tray 100 can be ensured while reducing overall weight.

In some other embodiments, the reinforcing rib structure 1101 includes a second reinforcing rib 140 disposed on the outer side wall of the annular frame 110. The second reinforcing rib 140 may also be constructed using any suitable structure, for example, a strip-shaped reinforcing rib, a mesh-shaped reinforcing rib, or a combination structure of both. Through cooperation between the second reinforcing rib 140 and the annular frame 110, the strength of the battery tray 100 can be ensured while reducing the overall weight.

In still some other embodiments, the reinforcing rib structure 1101 includes a first reinforcing rib 130 disposed on the inner side wall of the annular frame 110, and a second reinforcing rib 140 disposed on the outer side wall of the annular frame 110. In this solution, reinforcing ribs are disposed on both the inner side wall and the outer side wall of the annular frame 110, so that structural strength of the annular frame 110 is further improved, and performance of the battery pack is enhanced.

The first reinforcing rib 130 and the second reinforcing rib 140 may be constructed using any suitable structure. As shown in FIG. 3, in some implementations of the present disclosure, the first reinforcing rib 130 is constructed as first ribs 131, and the first ribs 131 are spaced apart in a length direction of at least one side frame 111 of the annular frame 110 and extend in a depth direction of the annular frame 110. The second reinforcing rib 140 is constructed as second ribs 141, and the second ribs 141 extend in the length direction of the at least one side frame 111 of the annular frame 110 and are spaced apart in the depth direction of the annular frame 110.

The first reinforcing rib 130 is disposed on the inner side wall of the annular frame 110 and extends in the depth direction of the annular frame 110. The first reinforcing rib 130 may be a plurality of first ribs 131, and the plurality of first ribs 131 may be spaced apart in the length direction of the at least one side frame 111 of the annular frame 110. For example, when the annular frame 110 is a quadrilateral structure enclosed by four side frames 111, the first rib 131 may be disposed on an inner side wall of one side frame 111 of the quadrilateral structure, or on inner side walls of two, three, or four side frames 111. For example, when disposed on the inner side walls of two side frames 111, the two side frames 111 may be disposed opposite to each other.

In addition, the second reinforcing rib 140 may be constructed as the second ribs 141 extending in the length direction of one side frame 111, two side frames 111, three side frames 111, or four side frames 111 of the annular frame 110 and spaced apart in the depth direction of the annular frame 110. The second reinforcing rib 140 cooperates with the first reinforcing rib 130, thereby improving overall strength of the battery tray 100.

The first reinforcing rib 130 and the second reinforcing rib 140 may both be strip-shaped ribs. Because extension directions of the first reinforcing rib 130 and the second reinforcing rib 140 are different, longitudinal-transverse or mesh-like support is formed, to improve structural strength of the battery tray 100.

In some embodiments, a cross-sectional area of the first rib 131 gradually increases toward the bottom plate 200. The first rib 131 may be constructed as a structure with a gradually increasing height, making demolding easier while improving strength. In addition, it can also provide a guiding function to some extent during battery mounting. Moreover, as a depth increases, the height gradually increases, improving strength at the bottom. Certainly, the first rib 131 may alternatively have the same height and width in the extension direction, which can similarly achieve effect of improving the strength.

A wall thickness of the four side frames 111 of the integrally formed annular frame 110 may be 3 mm. Transverse reinforcing ribs on an outer side make an enclosure structure flat, facilitating assembly of an external thermal insulation material. Longitudinal reinforcing ribs on an inner side facilitate mold demolding. A design of the reinforcing ribs on the inner and outer sides improves strength of the die-cast aluminum enclosure frame.

To facilitate lifting, transportation, and mounting of the battery tray 100, in some embodiments, the battery tray 100 further includes a lifting lug 150 disposed on the outer side wall of the annular frame 110.

To further reduce weight, the lifting lug 150 includes a lifting lug body 151 and a lifting lug reinforcing rib 152 disposed on the lifting lug body 151. The lifting lug 150 is constructed as a structural form including the lifting lug body 151 and the lifting lug reinforcing rib 152, so that the weight of the lifting lug 150 can be reduced while ensuring strength, thereby further meeting a lightweight requirement of the battery tray 100.

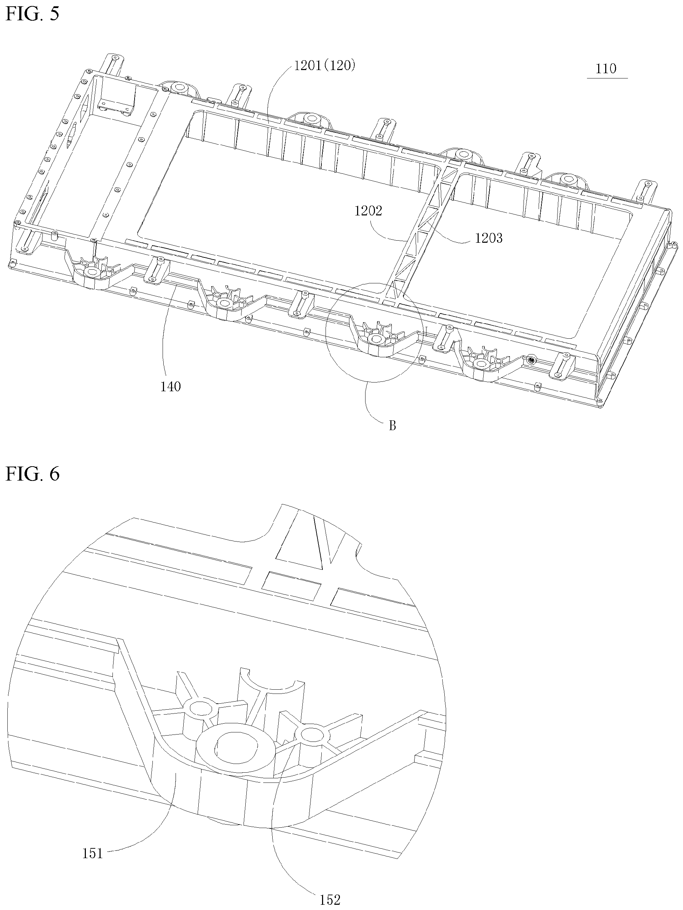

As shown in FIG. 5 and FIG. 6, a wall thickness of the lifting lug body 151 may be 3 mm, and the reinforcing rib may be a star-shaped reinforcing rib. The battery pack is mounted on a vehicle through the lifting lug 150. Six lifting lugs 150 bear weight of the battery pack. During load bearing, a force is evenly distributed without stress concentration portions. The lifting lug 150 has an even wall thickness and high load-bearing performance.

The support portion 120 may be constructed in any suitable form. In some embodiments, the support portion 120 includes an annular support sub-portion 1201 connected to the inner side wall of the annular frame 110, and a first support sub-portion 1202 disposed inside the annular support sub-portion 1201 and connected to at least two opposite sides of the annular support sub-portion 1201. The first adhesive groove 121 is provided on the annular support sub-portion 1201 and the first support sub-portion 1202. The first adhesive groove 121 includes an adhesive groove 1. The adhesive groove 1 is located on the annular support sub-portion 1201. The adhesive groove 1 is constructed in an annular shape and disposed along a contour of the annular support portion 1201. The second adhesive groove 122 is constructed in an annular shape and disposed along the contour of the annular support sub-portion 1201. The second adhesive groove 122 and the adhesive groove 1 are spaced apart on the annular support portion 1201. In addition, to further improve overall support strength, the support portion 120 further includes the first support sub-portion 1202 connected to at least the two opposite sides of the annular support sub-portion 1201. The first support sub-portion 1202 is formed with an adhesive groove 2 that communicates with the adhesive groove 1 of the annular support sub-portion 1201. The adhesive groove 2 is located on the first support sub-portion 1202, and the adhesive groove 2 is disposed in an extension direction of the first support sub-portion 1202. The adhesive groove 1 and the adhesive groove 2 jointly form the first adhesive groove 121, to fill the structural adhesive. The first support sub-portion 1202 can further support the bottom of the battery, and a wall thickness of the first support sub-portion 1202 may be 5 mm. In addition, to further improve strength of the first support sub-portion 1202, a support reinforcing rib 1203 may be formed in the first support sub-portion 1202, for example, a mesh-like reinforcing rib, to increase structural strength of the first support sub-portion 1202.

An embodiment of the present disclosure provides a battery pack. The battery pack may include a cell module and the battery tray 100 of the foregoing embodiments. Therefore, the battery pack also has all advantages of the foregoing battery tray 100. Details are not described herein again. A battery is mounted in the battery tray 100.

An embodiment of the present disclosure further provides a power-consuming device. The power-consuming device includes the battery pack of the foregoing embodiments. Therefore, the power-consuming device also has all advantages of the foregoing battery pack. The power-consuming device includes a vehicle, other charging and discharging device used for power supply, or the like.

The battery tray 100, the battery pack, and the power-consuming device of the present disclosure have the following advantages.

The battery tray 100 has a high degree of lightweighting. Because weight of the battery pack accounts for a large proportion of a vehicle equipment, a lightweighting requirement for the battery pack is more urgent. Based on this requirement, the battery tray 100 of this embodiment employs an overall frame structure integrally formed by die casting using heat-treatment-free aluminum alloy. A wall thickness of an enclosure is designed to be 3 mm. Four sides of the enclosure, a lifting lug 150, and a load-bearing region at the bottom of the enclosure are designed with mesh-like reinforcing ribs to meet high-strength and lightweight requirements of the vehicle for the battery tray 100. The battery tray 100 has a high degree of lightweighting.

The battery tray 100 has a high insulation and withstand voltage rating. The battery tray 100 is required to carry a high-voltage battery module and meet requirements for insulation and withstand voltage during charging and discharging. Based on this requirement, the bottom of the battery tray 100 employs a high-strength PCM bottom plate 200. After a cell module is assembled into the enclosure, a bottom surface cooperates with the PCM, thereby providing high insulation withstand voltage performance of the battery. This resolves problems in conventional technologies in which an assembly size requirement between the module and the battery tray 100 is high, addition of an additional insulating coating is needed, and the battery pack is prone to arc strikes. In the present patent, bottom sealing, load-bearing, and insulation are integrally designed, so that the battery tray 100 has a high insulation and withstand voltage rating and low costs.

The battery box has a high sealing level. The battery pack is required to meet various operating conditions such as vibration, stone impact, high and low temperatures, and water wading. In addition, the battery pack remains sealed without failure and retains original functionality under the various operating conditions. Therefore, a sealing requirement for the battery pack is extremely high. Based on these requirements, the battery tray 100 employs a frame integrally formed by high-vacuum and high-pressure die casting using high-strength aluminum alloy. The frame has no weld joints, a dense internal structure, and high sealing performance. A bottom support surface (the support portion 120) of the battery tray 100 is provided with two circumferential adhesive grooves (the first adhesive groove 121 and the second adhesive groove 122). An inner-ring adhesive groove (the first adhesive groove 121) is used for a high-bond-strength structural adhesive connection between a high-strength glass-fiber composite bottom plate 200 and a circumference of a support surface of the die casting battery tray 100. Adhesive overflow ports 121a are evenly provided around the adhesive groove to ensure that a bonding surface is free of voids or adhesive discontinuities after a pressed adhesive is cured, thereby ensuring bonding strength of the bottom plate 200. An outer-ring adhesive groove (the second adhesive groove 122) is used for applying a high-performance sealant to ensure sealing between the glass-fiber bottom plate 200 and the die casting enclosure frame.

The foregoing describes preferred implementations of the present disclosure in detail with reference to the accompanying drawings. However, the present disclosure is not limited to specific details in the foregoing implementations. Within the scope of the technical concept of the present disclosure, a plurality of simple variations may be made to the technical solution of the present disclosure, and all these simple variations fall within the protection scope of the present disclosure.

In addition, it should be noted that the specific technical features described in the foregoing specific implementations may be combined in any appropriate manner when there is no contradiction. To avoid unnecessary repetition, various possible combination manners are not separately described in the present disclosure.

In addition, different implementations of the present disclosure may be randomly combined, and should also be considered as disclosed in the present disclosure provided that such combinations do not depart from the idea of the present disclosure.

## Claims

1. A battery tray (100), comprising:
an annular frame (110);
a support portion (120) disposed at the bottom of the annular frame (110), the support portion (120) being formed with a first adhesive groove (121) and a second adhesive groove (122), the first adhesive groove (121) being configured to dispose a first adhesive (300), the second adhesive groove (122) being configured to dispose a second adhesive (400), and the second adhesive groove (122) being annular and disposed along a contour of the support portion (120); and
a bottom plate (200) sealingly connected to the support portion (120) through the first adhesive (300) disposed in the first adhesive groove (121) and the second adhesive (400) disposed in the second adhesive groove (122).

2. The battery tray according to claim 1, wherein the first adhesive groove (121) is located on an inner side of the second adhesive groove (122).

3. The battery tray according to claim 1 or 2, wherein the first adhesive (300) is a structural adhesive, and the second adhesive (400) is a sealant.

4. The battery tray according to any one of claims 1 to 4, wherein an adhesive overflow port (121a) is formed on an inner side of the first adhesive groove (121).

5. The battery tray according to claim 4, wherein there are a plurality of adhesive overflow ports (121a), and the plurality of adhesive overflow ports (121a) are spaced apart along an inner side edge of the first adhesive groove (121).

6. The battery tray according to any one of claims 1 to 5, wherein a width of the first adhesive groove (121) is greater than 24 mm, and a width of the second adhesive groove (122) is greater than 5 mm; and/or
depths of the first adhesive groove (121) and the second adhesive groove (122) are greater than or equal to 1 mm.

7. The battery tray according to any one of claims 1 to 6, wherein the bottom plate (200) is a PCM plate.

8. The battery tray according to any one of claims 1 to 7, wherein a side wall of the annular frame (110) is formed with or provided with a reinforcing rib structure (1101).

9. The battery tray according to claim 8, wherein the reinforcing rib structure (1101) comprises a first reinforcing rib (130) disposed on an inner side wall of the annular frame (110); and/or
the reinforcing rib structure (1101) comprises a second reinforcing rib (140) disposed on an outer side wall of the annular frame (110).

10. The battery tray according to claim 9, wherein the first reinforcing rib (130) is constructed as first ribs (131) spaced apart in a length direction of at least one side frame (111) of the annular frame (110) and extending in a depth direction of the annular frame (110); and
the second reinforcing rib (140) is constructed as second ribs (141) extending in the length direction of the at least one side frame (111) of the annular frame (110) and spaced apart in the depth direction of the annular frame (110).

11. The battery tray according to claim 10, wherein a cross-sectional area of the first rib (131) gradually increases toward the bottom plate (200).

12. The battery tray according to any one of claims 1 to 11, wherein the battery tray further comprises a lifting lug (150) disposed on the outer side wall of the annular frame (110).

13. The battery tray according to claim 12, wherein the lifting lug (150) comprises a lifting lug body (151) and a lifting lug reinforcing rib (152) disposed on the lifting lug body (151).

14. The battery tray according to any one of claims 1 to 13, wherein the support portion (120) comprises an annular support sub-portion (1201) connected to the bottom of the inner side wall of the annular frame (110), and a first support sub-portion (1202) disposed inside the annular support sub-portion (1201) and connected at least two opposite sides of the annular support sub-portion (1201);
the first adhesive groove (121) is provided on the annular support sub-portion (1201) and the first support sub-portion (1202); and
the second adhesive groove (122) is provided on the annular support sub-portion (1201) and spaced apart from the first adhesive groove (121).

15. The battery tray according to any one of claims 1 to 14, wherein the tray is integrally formed by die casting.

16. A battery pack, wherein the battery pack comprises the battery tray (100) according to any one of claims 1 to 15.

17. A power-consuming device, wherein the power-consuming device comprises the battery pack according to claim 16.
